# EUROPEAN PATENT APPLICATION

(11) **EP 2 328 088 A1**
(43) Date of publication of application: **01.06.2011**
(21) Application number: 10758374.2
(22) Date of filing: 08.03.2010
(51) Int. Cl.: G06F 11/00, G06F 9/445

(54) **HOME NETWORK SYSTEM, GATEWAY DEVICE, AND FIRMWARE UPDATE METHOD**

(30) Priority: 01.04.2009 JP 2009089524
(71) Applicant: Hitachi Solutions, Ltd., Tokyo 140-0002 (JP)
(72) Inventor: OHAMA Nobuyuki, Tokyo 140-0002 (JP); NAKAMURA Yuichi, Tokyo 140-0002 (JP)
(74) Representative: Liesegang, Eva
(86) International application number: PCT/JP2010/053775
(87) International publication number: WO 2010/113598

(57) **Abstract**

There is provided a technique for more efficiently updating a piece of firmware in an information processing device forming a home network. To this end, the invention provides a remote management section for communicating with a server device storing a piece of software to be distributed and a controlled device within a home network and managing an application, a service management program for managing a service of the controlled device, a firmware management program for managing a piece of firmware of the controlled device, a gateway firmware management program for managing a piece of firmware of the gateway device, a gateway firmware updating program which rewrites the piece of firmware of the gateway device, and a dependence relationship management program which, when a piece of software is to be distributed, analyzes a dependence relationship aggregation table obtained by aggregating the contents of a dependence relation table describing a piece of software on which the piece of software to be distributed depends (see Figure 1).

## Description

### Technical Field

The present invention relates to a home network system, a gateway device, and a firmware update method and, for example, to a technique for firmware deployment operation such as installing, updating, or uninstalling a piece of firmware.

### Background Art

Application management systems and application management methods intended to update an application for a home appliance (controlled device) such as a DVD and dynamically extend functions of the application in a home network environment have already been proposed (see, e.g., Patent Literature 1). In these proposals, for the purpose of sensing whether an information processing device (controlled device) is newly added to a home network with an application server (e.g., a home gateway), middleware such as UPnP (Universal Plug and Play) uses the OSGi (Open Services Gateway Initiative) framework to add an application which enables use of functions (services) of the information processing device from the application server to the application server. It is said that this allows, for example, rewriting of a piece of JAVA (registered trademark) bundle software (an application on OSGi) without restarting an operating system.

### Citation List

### Patent Literature

Patent Literature 1: JP Patent Publication (Kokai) No. 2002-24039 A

### Disclosure of the Invention

### Technical Problem

However, techniques for updating a piece of bundle software as in Patent Literature 1 give no regard to updating of a piece of software other than an application (a piece of bundle software) on the OSGi framework (remote service providing platform), such as a piece of firmware (e.g., a kernel (a software file for the core of an OS corresponding to I/O processing and the like)), in a home gateway. The techniques also give no regard to updating of a piece of firmware in a controlled device which is connected to a home gateway.

Additionally, the techniques give no regard to a mechanism for simultaneously modifying an application and a piece of firmware having a dependence relationship with the application, such as adding an application on the OSGi framework of a home gateway and modifying a piece of firmware of a controlled device, in a case where a new service with a combination of controlled devices is added (a case where one new service is implemented by using a combination of functions) and other cases. Note that the term firmware refers to all data stored in advance in a nonvolatile memory including data other than applications (pieces of bundle software) on the OSGi framework of an embedded device in this specification.

The present invention has been made in consideration of the circumstances, and has as its object to propose, in a gateway device and a controlled device forming a home network and managed by an application execution environment such as the OSGi framework, a mechanism for updating a piece of firmware other than an application (a piece of bundle software) running on the application execution environment such as the OSGi framework and a mechanism for simultaneously modifying an application running on the OSGi framework and a piece of firmware having a dependence relationship with (combined with) the application.

### Solution to Problem

In order to solve the above-described problem, a home network system according to the present invention includes a gateway device and at least one controlled device connected to the gateway device over a home network. The gateway device includes a gateway firmware updating unit which installs or updates a piece of firmware of the gateway device, and each of the at least one controlled device includes a firmware updating unit which installs or updates a piece of firmware of the controlled device. When a piece of firmware is to be installed or updated, a communication unit of the gateway device acquires a firmware component of the gateway device and/or the controlled device and an update file describing a procedure for installing (performing updating with) the firmware component from a server placed outside the home network. The gateway firmware updating unit and/or the firmware updating unit installs the acquired firmware component in the gateway device and/or the controlled device according to the installation procedure described in the update file. Note that the piece of firmware is a piece of software which runs outside an application execution environment (e.g., on the OSGi framework) of the gateway device.

The gateway device further includes a dependence relationship management table which manages information on a piece of firmware and/or an application required to implement a predetermined service and information on a piece of firmware and an application currently installed in the gateway device and the controlled device, a dependence relationship management unit which determines whether the piece of firmware and/or the application required to implement the predetermined service is present in the gateway device and/or the controlled device while referring to the dependence relationship management table, and an application updating unit which installs or updates the application. The gateway device acquires a firmware component and/or an application component for implementing the predetermined service and an update file describing a procedure for installing (performing updating with) the firmware component from the server on the basis of a result of determination by the dependence relationship management unit. After that, the gateway firmware updating unit and/or the firmware updating unit installs the acquired firmware component in the gateway device and/or the controlled device according to the installation procedure described in the update file. The application updating unit installs the acquired application component (an application which runs in the application execution environment) in the gateway device.

Further features of the present invention will become apparent from the best mode for carrying out the present invention and the accompanying drawings below.

### Advantageous Effects of Invention

According to the present invention, it is possible to perform bug fixing and function expansion after device shipment, including updating pieces of firmware of a gateway device and a controlled device not regarded as update targets by the OSGi framework.

Simultaneous modification of an application running on the OSGi framework and a piece of firmware having a dependence relationship with the application allows a reduction in burden of update work and shortening of a period of time when a service to be provided by a device serving as an update target is stopped.

### Brief Description of Drawings

[Figure 1] Figure 1 is a diagram showing the schematic configuration of a center server and a home network system according to an embodiment of the present invention.
[Figure 2] Figure 2 is a functional block diagram of a remote management section.
[Figure 3] Figure 3 is a flow chart for explaining a process of analyzing a dependence relationship aggregation table by a dependence relationship management program.
[Figure 4] Figure 4 is a flow chart for explaining a dependence destination settlement process to be performed by the dependence relationship management program.
[Figure 5] Figure 5 is a flow chart for explaining the procedure for installing a depended-on application or a piece of depended-on firmware.
[Figure 6] Figure 6 is a chart showing an example of a dependence relationship aggregation table in which not all dependence relationships are settled.
[Figure 7] Figure 7 is a chart showing an example of a dependence relationship table which is distributed simultaneously with installation of service A of controlled device A in a gateway device.
[Figure 8] Figure 8 is a chart showing an example of a dependence relationship table which is distributed simultaneously with installation of firmware A, on which service A of controlled device A depends, in controlled device A.
[Figure 9] Figure 9 is a view showing an example of a firmware update procedure table (update file).
[Figure 10] Figure 10 is a chart showing an example of the dependence relationship aggregation table after dependence relationships are settled.
[Figure 11] Figure 11 is a chart showing an example of a management information table.
[Figure 12] Figure 12 is a flow chart for explaining a process of updating a piece of firmware and an application.

### Description of Embodiments

The present invention provides a mechanism for updating a piece of firmware which does not run in an application execution environment such as the OSGi framework.

An embodiment of the present invention will be described below with reference to the accompanying drawings. Note that this embodiment is merely an example for implementing the present invention and is not intended to limit the technical scope of the present invention. Components common to the drawings are denoted by same reference numerals.

### <System Configuration>

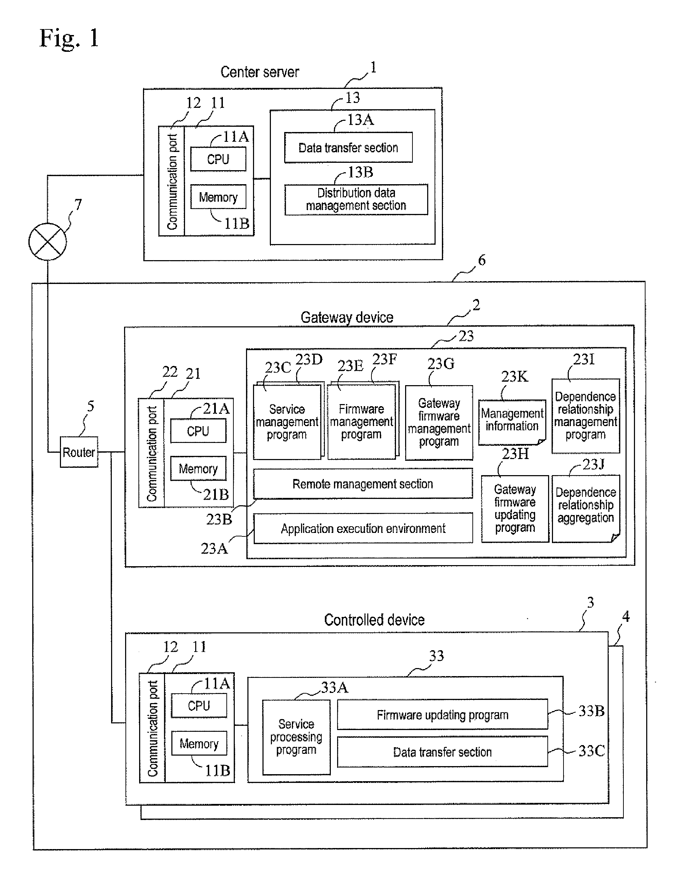

Figure 1 is a diagram showing the schematic configuration of an information processing system (firmware management system) according to the embodiment of the present invention.

The firmware management system includes a center server 1 which provides content (including information on a piece of firmware to be added), a gateway device 2 for controlling all controlled devices within a home network 6, at least one controlled device 3, and a router 5.

The center server 1 is connected to the home network 6 composed of the gateway device 2, the controlled device 3, a controlled device 4, and the router 5 via the Internet 7.

The center server 1 includes a terminal device 11 having a CPU 11A and a memory 11B, a communication port 12, and an external storage device 13. The external storage device 13 in the center server 1 stores a data transfer section 13A which transmits an instruction for data (software) update and an update to a piece of software serving as an update target to the gateway device 2 and a distribution data management section 13B which searches for a piece of software to be transmitted and performs other processing as software codes. The software codes operate as a data transfer unit and a distribution data management unit, respectively, in cooperation with the CPU 11 A.

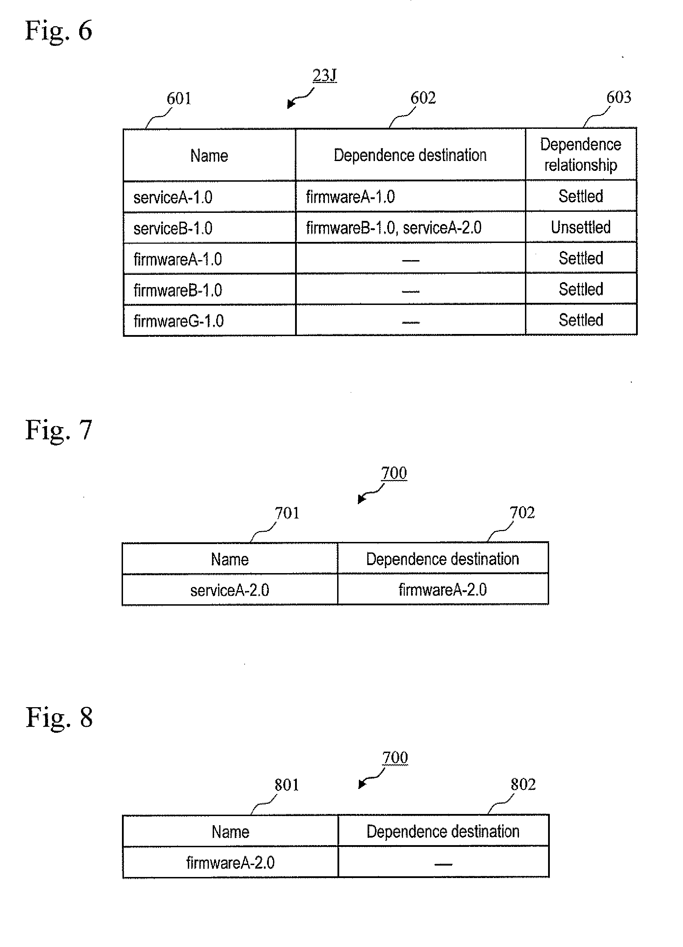

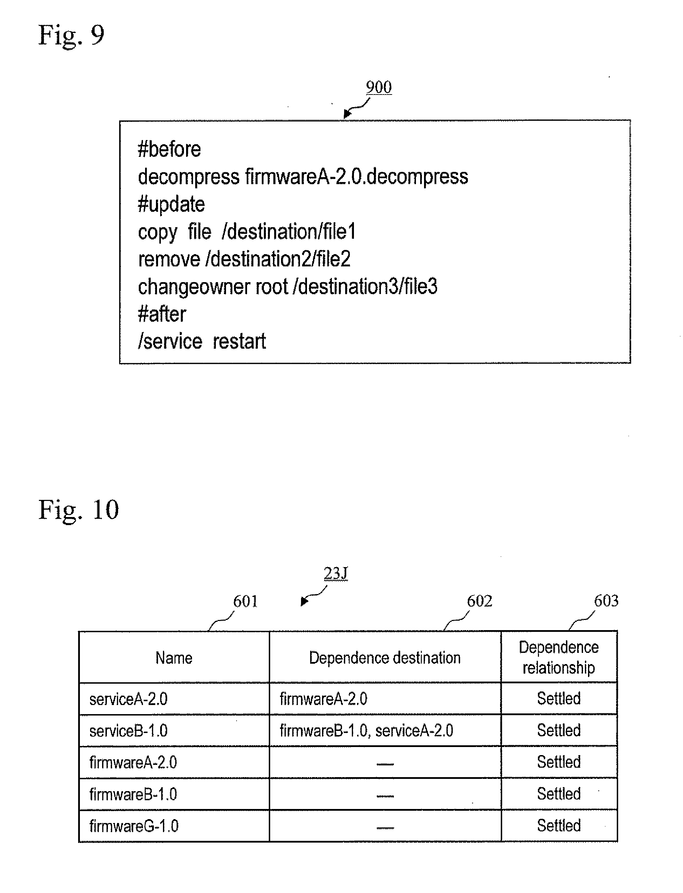

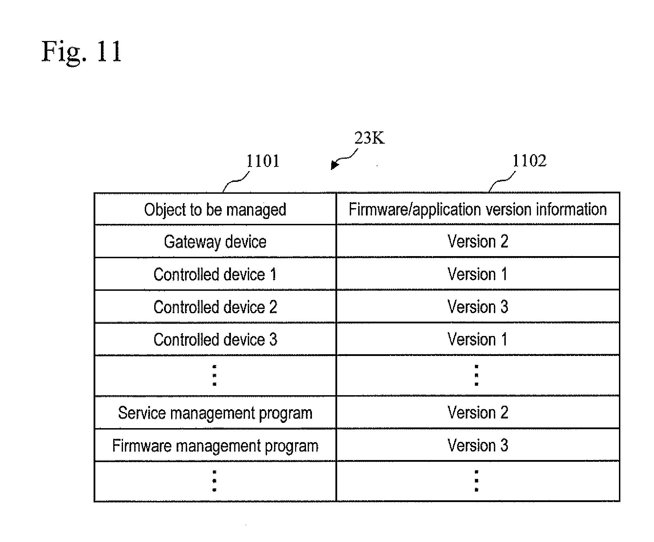

The gateway device 2 includes a terminal device 21 having a CPU 21A and a memory 21B, a communication port 22, and an external storage device 23. The external storage device 23 stores an application execution environment 23A for executing an application (a program serving as a foundation for executing an application), a remote management section 23B which communicates with the center server 1 to update an application and performs other processing, service management programs 23C and 23D for managing services of controlled devices, firmware management programs 23E and 23F for managing pieces of firmware of the controlled devices 3 and 4, a gateway firmware updating program 23G for managing a piece of firmware of the gateway device 2, a gateway firmware updating program 23H for rewriting the piece of firmware of the gateway device 2, a dependence relationship management program 231 which analyzes a dependence relationship between pieces of software, a dependence relationship aggregation table 23J (Figures 6 and 10) which is obtained by aggregating dependence relationships among pieces of software stored in the gateway device 2 and the controlled devices 3 and 4, and management information 23K (Figure 11) for managing the version information of application programs and pieces of firmware. The programs and sections operate as processing units in cooperation with the CPU 21A. For example, the service management programs 23C and 23D operate as a service management unit under the control of the CPU 21A. Note that since a piece of bundle software in the OSGi framework runs in the application execution environment 23A, the service management programs 23C and 23D, the firmware management programs 23E and 23F, and the gateway firmware updating program 230 are illustrated as being located above the application execution environment 23A in Figure 1. When a new function is implemented by combining two or more functions (services), functions (service components) to be combined are referred to herein as having a mutual dependence relationship with each other. For example, when a monitoring function of sensing an intruder by a sensor function and activating a camera function to record the intruder is implemented, the sensor function and the camera function are referred to as having a mutual dependence relationship.

The controlled devices 3 and 4 each include a terminal device 31 having a CPU 31A and a memory 31B, a communication port 32, and an external storage device 33. The external storage device 33 stores a service processing program 33A serving as a section which performs services of the controlled devices 3 and 4, a firmware updating program 33B serving as a section which rewrites a piece of firmware, and a data transfer section 33C for receiving an instruction for update and an update to a piece of software serving as an update target from the gateway device 2 as pieces of software. The programs and sections operate as processing units in cooperation with the CPU 31A. For example, the service processing program 33A operates as a service processing unit under the control of the CPU 31A.

In the gateway device 2, the service management programs 23C and 23D request the service processing programs 33A of the controlled devices 3 and 4 to perform predetermined services by using the remote management section 23B. The service processing programs 33A transmit in response processing results obtained by performing the requested services (e.g., the success or failure of the performance of the services and processed data obtained by the performance) to the service management programs 23C and 23D.

The firmware management programs 23E and 23F request the firmware updating programs 33B of the controlled devices to perform a process of updating pieces of firmware of the controlled devices by using the remote management section 23B. The firmware updating programs 33B transmit in response processing results obtained by performing the process of updating the pieces of firmware of the controlled devices (e.g., information on the success or failure of the updating and the details of the updating) to the firmware management programs 23E and 23F. Note that a firmware management program to be called in the gateway device 2 is prepared for each control device in order to update pieces of firmware of controlled devices.

The gateway firmware management program 23G requests the gateway firmware updating program 23H to perform a process of updating a piece of firmware of the gateway device 2 by using the remote management section 23B. The gateway firmware updating program 23H transmits in response a processing result obtained by performing the process of updating the piece of firmware (e.g., information on the success or failure of the updating and the details of the updating) to the gateway firmware management program 23G. As described above, the process of updating the piece of firmware of the gateway device 2 is performed by the gateway firmware updating program 23H, which is not affected by the application execution environment and is operated by an OS.

Note that if rewriting of a single piece of firmware is to be implemented, the dependence relationship management program 231 and the dependence relationship aggregation table 23J need not be provided.

The center server 1 may include the dependence relationship management program 231, analyze the dependence relationship or each piece of distribution data in advance, and simultaneously distribute not only an update to a piece of software requested to be updated but also an update to a piece of depended-on software.

The gateway device 2 and the controlled devices 3 and 4 may each be provided with an emergency kernel which can run without fail even if a malfunction occurs in the device during an update. A kernel to be run the next time may be changed to the emergency kernel immediately before the start of an update, and the kernel may be restored to its original one immediately after the update.

A startup script describing an instruction to start the application execution environment 23A, the remote management section 23B, and applications which run on the application execution environment 23A immediately after the OS of the gateway device 2 is started may be prepared in order to conform completion of an update when restart of the OS is required at the time of firmware updating.

The firmware management programs 23E and 23F, the gateway firmware management program 23 G, and the gateway firmware updating program 23H may not be provided in the gateway device 2 in advance. The service management programs 23C and 23D may acquire the programs from the outside by using the remote management section 23B and add them to the gateway device 2.

The controlled devices 3 and 4 may each include an application execution environment and a remote management section, like the gateway device 2.

The center server and the gateway device may each include an input device and a display device.

### <Internal Configuration of Remote Management Section>

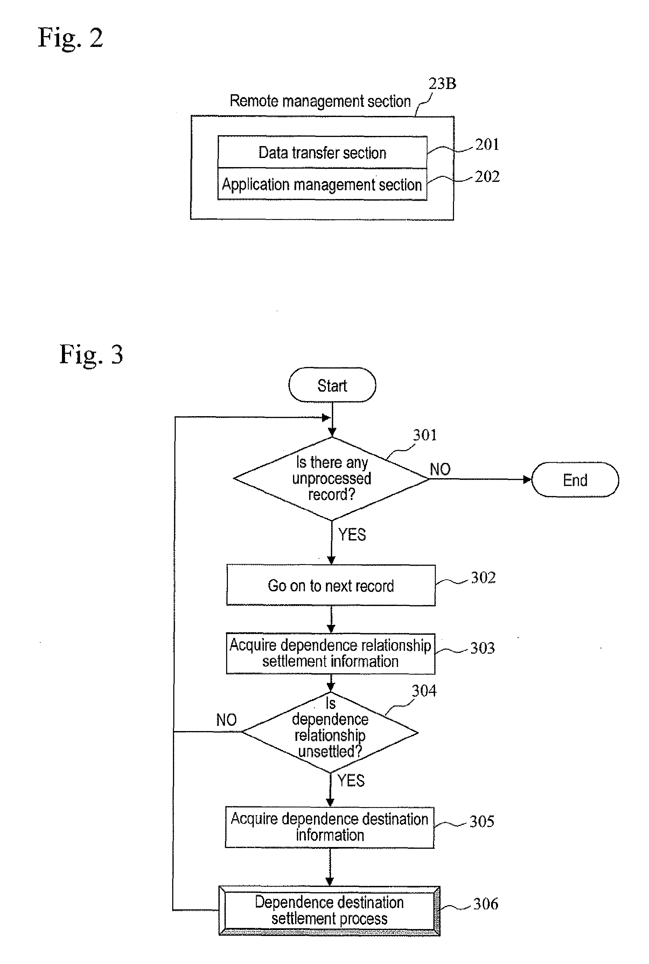

Figure 2 is a block diagram showing functions of the remote management section 23B. The remote management section 23B includes a data transfer section 201 for transmitting and receiving a piece of software and an update instruction between the center server 1 and the controlled devices 3 and 4 and an application management section 202 which manages startup and termination of an application and the like.

### <Updating of Firmware and Application>

Figure 11 is a chart showing management information for the pieces of firmware and applications of the gateway device and controlled devices managed by the gateway device 2. As can be seen from Figure 11, the gateway device 2 manages the version information of applications (e.g., the service management programs, the firmware management programs, the gateway firmware management program, the gateway firmware updating program, the service processing programs, and the firmware updating programs) and pieces of firmware currently used in the controlled devices 3 and 4 and the gateway device 2. The management information 23K is used to determine whether an application or a piece of firmware is data to be updated at the time of updating the application or the piece of firmware.

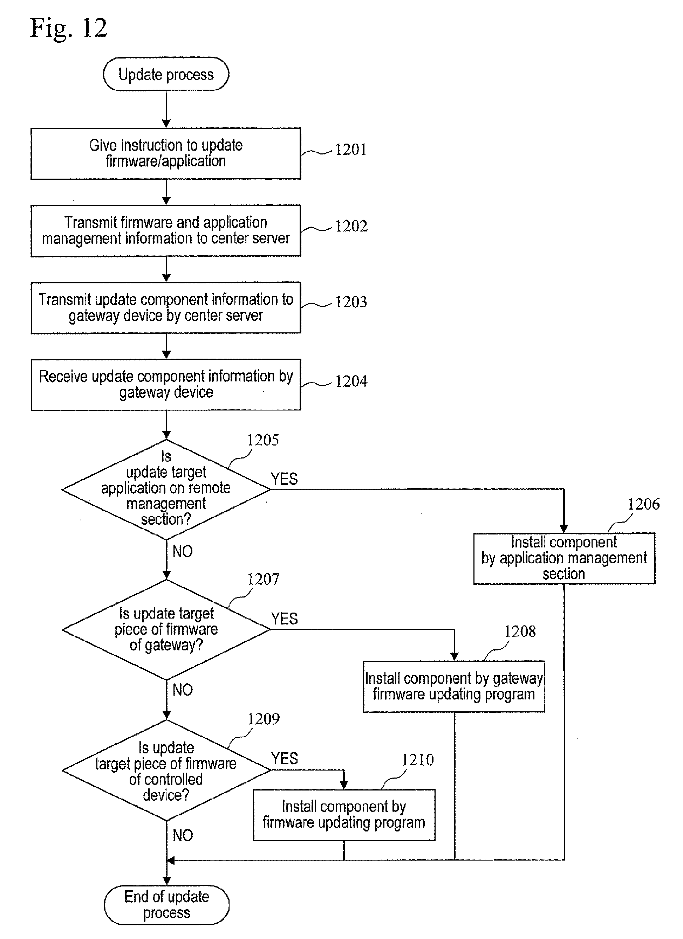

Figure 12 is a flow chart for explaining a process of updating a piece of firmware and an application.

A user or an administrator gives an instruction to update a piece of firmware and/or an application by using an input section (not shown) of the gateway device 2 (step 1201). Upon receipt of the update instruction, the remote management section 23B of the gateway device 2 transmits the management information 23K to the center server 1 together with the firmware and application update request (step 1202).

Upon receipt of the management information 23K and the update request, the center server 1 determines on the basis of the transmitted management information (the version information of the pieces of firmware and the like) 23K whether there is any piece of firmware or the like to be updated, by using the distribution data management section 13B. If there is a piece of firmware or the like to be updated, the center server 1 transmits an update component to the gateway device 2 (step 1203).

The gateway device 2 receives the update component by using the remote management section 23B and checks with which application or piece of firmware the received update component is associated (step 1204). The remote management section 23B determines whether the update target is (the update component is for) an application on the remote management section (step 1205). If YES in step 1205, the remote management section 23B instructs the application management section (application management unit) 202 to update the application concerned with the received update component. Upon receipt of the update instruction, the application management section 202 installs the update component and updates the application (step 1206). Since each application on the remote management section 23B is a piece of OSGi bundle software, the application can be updated only by installing an update component.

On the other hand, if NO in step 1205, the remote management section 23B determines whether the update target is a piece of firmware of the gateway device 2 (step 1207). If YES in step 1207, the remote management section 23B instructs the gateway firmware management program (gateway firmware management unit) 23G to update the piece of firmware concerned with the received update component. Upon receipt of the update instruction, the gateway firmware management program 23G passes the update component to the gateway firmware updating program (gateway firmware updating unit) 23H, and the gateway firmware updating program 23H updates the piece of firmware concerned. A piece of firmware cannot be updated only by installing an update component, unlike a piece of bundle software. For this reason, the gateway firmware updating program 23H performs updating while referring to an update file (Figure 9) transmitted from the center server 1 together with the update component. The update file (Figure 9) is a file describing an update procedure for the piece of firmware concerned. A firmware update process based on such an update file will be described later.

On the other hand, if NO in step 1207, the remote management section 23B determines whether the update target is one of pieces of firmware of the controlled devices 3 and 4 (step 1209). If YES in step 1209, the remote management section 23B instructs the firmware management programs (firmware management unit) 23E and 23F to update the piece of firmware concerned with the received update component. Upon receipt of the update instruction, the firmware management programs 23E and 23F pass the update component and the update file to the corresponding firmware updating program (firmware updating unit) 33B via the remote management section 23B, and the firmware updating program 33B updates the piece of firmware concerned (step 1210). Although firmware updating is also performed in this case, updating of the piece of firmware is not completed only by installing the update component. The updating is performed on the basis of the update file describing an update procedure.

If NO in step 1209, after step 1206, after step 1208, or after step 1210, the process ends.

### <Firmware Updating Based on Update File>

Figure 9 is a view showing an example of a firmware update procedure table (update file). Figure 9 shows, for example, an example of a finnware update procedure table which is distributed when firmware A, on which service A of controlled device A depends, is installed in controlled device A. Such an update file is generated for each update component by the distribution data management section of the center server 1 and is transmitted to the gateway device 2 by the data transfer section 13A.

As described above, installation and updating of a service on the remote management section 23B is implemented only by downloading an update (because the service is a piece of bundle software). In contrast, installation and updating of a piece of firmware requires various processes including change of settings, such as the privilege for and the owner of a file, and system restart. Accordingly, the table describing the procedures for the processes is necessary.

In the firmware update procedure table, a process required prior to updating is described in the "#before" section, the details of the updating are described in the "#update" section, and a process required after the updating is described in the "#after" section. A process of decompressing downloaded data and the like is described in the #before section, and data copying, data deletion, change of the owner of a file, and the like are described in the #update section. A process of restarting a program and the like are described in the #after section.

According to an updating procedure described in the firmware update procedure table, a corresponding one of the processing units (the gateway firmware updating program 23H and the firmware updating programs 33B) reflects an update component in a piece of existing firmware, thereby implementing updating.

### <Analysis of Dependence Relationship Aggregation Table>

Figure 3 is a flow chart for explaining a process of analyzing a dependence relationship aggregation table to be performed by the dependence relationship management program. The dependence relationship management program 231 performs the dependence relationship analysis while referring to the dependence relationship aggregation table 23J (Figure 6).

First, the dependence relationship management program (dependence relationship management unit) 231 checks whether there is any unprocessed record in the dependence relationship aggregation table 23J. If there is no unprocessed record, the dependence relationship management program 231 ends the process; otherwise, the flow shifts to step 302 (step 301).

The dependence relationship management program 231 goes on to the next unprocessed record (a first unprocessed record at the beginning of the process) (step 302) and acquires a piece of dependence relationship settlement information from the dependence relationship aggregation table 23J (step 303).

The dependence relationship management program 231 checks whether the dependence relationship is unsettled in the acquired unprocessed record (step 304). If the dependence relationship is settled, the flow returns to step 301; otherwise, the flow advances to step 305.

The dependence relationship management program 231 acquires a piece of dependence destination information from the dependence relationship aggregation table 23J (step 305) and performs a dependence destination settlement process by using the piece of dependence destination information (step 306). The details of the dependence destination settlement process will be described later.

### <Dependence Destination Settlement Process>

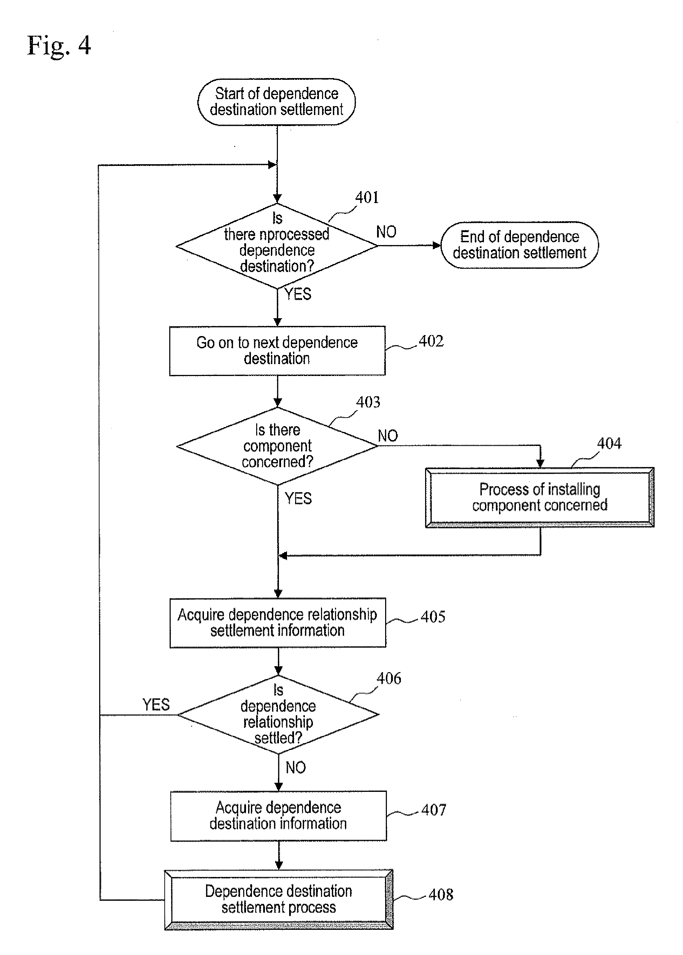

Figure 4 is a flow chart for explaining the dependence destination settlement process to be performed by the dependence relationship management program.

The dependence relationship management program 231 first checks whether there is any unprocessed dependence destination in acquired dependence destination information (step 401). If there is no unprocessed dependence destination, the process ends; otherwise, the flow shifts to step 402.

The dependence relationship management program 23I goes on to the next dependence destination (a first unprocessed dependence destination at the beginning of the process) (step 402) and makes an inquiry to the application management section 202 about whether a component concerned is installed. For example, the dependence relationship management program 23I checks whether components named FirmwareB-1.0 and SeriviceA-2.0, which are required to implement a component named ServiceB-1.0 in Figure 6, are installed. In this example, the name FirmwareB-1.0 is present in the column for 601 in Figure 6, but the name ServiceA-2.0 is not present. It can be seen from the table that the component named ServiceA-2.0 is not installed.

If the component concerned is not installed, the flow shifts to step 404; otherwise, the flow shifts to step 405 (step 403).

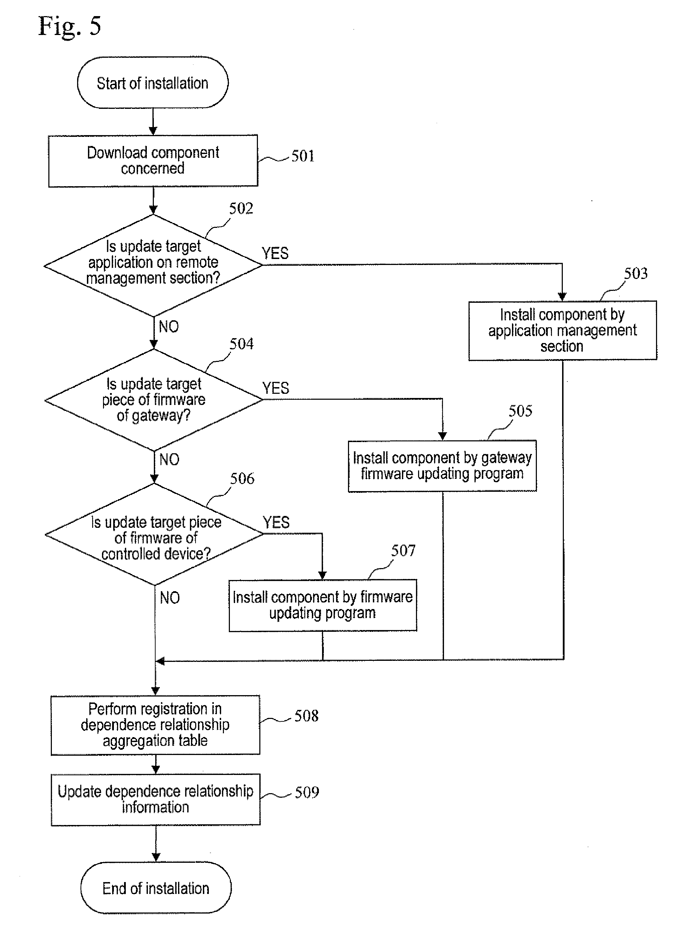

In step 404, the component concerned required to implement a service is installed (step 404). The details of step 404 will be described later with reference to Figure 5.

The dependence relationship management program 231 acquires a piece of dependence relationship settlement information from the dependence relationship aggregation table 23J (step 405) and checks whether the dependence relationship is unsettled. If the dependence relationship is settled, the flow shifts to step 401; otherwise, the flow shifts to step 407 (step 406).

If the dependence relationship is not settled (NO in step 406), the dependence relationship management program 23I acquires a piece of dependence destination information (step 407). The dependence relationship management program 231 performs the dependence destination settlement process (steps 401 to 407) again (step 408).

### <Installation of Component Concerned>

Figure 5 is a flow chart for explaining a process of installing an application or a piece of firmware. The process in Figure 5 is different from the process in Figure 12 in that the former process takes dependence relationships into account. However, the processes have common steps and overlap with each other.

The gateway device 2 requests the center server 1 to distribute a component concerned. The data transfer section 13A of the center server 1 receives the request, and the distribution data management section 13B locates the component concerned. The data transfer section 13A transmits the acquired component to the gateway device 2 (step 501).

The remote management section 23B of the gateway device 2 determines whether the component concerned is for an application on the remote management section (step 502). If YES in step 502, the remote management section 23B instructs the application management section (application management unit) 202 to update an application concerned with the received update component. Upon receipt of the update instruction, the application management section 202 installs the update component and updates the application concerned (step 503). Since each application on the remote management section 23B is a piece of OSGi bundle software, the application can be updated only by installing an update component. When the process in step 503 ends, the flow shifts to step 508.

On the other hand, if NO in step 502, the remote management section 23B determines whether the update target is a piece of firmware of the gateway device 2 (step 504). If YES in step 504, the remote management section 23B instructs the gateway firmware management program (gateway firmware management unit) 23G to install a firmware component concerned by using the received update component. Upon receipt of the installation instruction, the gateway firmware management program 23G passes the component to the gateway firmware updating program (gateway firmware updating unit) 23H, and the gateway firmware updating program 23H installs the piece of firmware concerned (step 505). A piece of firmware cannot be updated only by installing a firmware component, unlike bundle software. For this reason, the gateway firmware updating program 23H performs installation while referring to an update file (Figure 9) transmitted from the center server 1 together with the firmware component. The details of the update file (Figure 9) and the updating (installation) are as described above. When the process in step 505 ends, the flow shifts to step 508.

On the other hand, if NO in step 504, the remote management section 23B determines whether the installation target is a piece of firmware of the controlled devices 3 and 4 (step 506). If YES in step 506, the remote management section 23B instructs the firmware management programs (firmware management unit) 23E and 23F to update a piece of firmware concerned with the received component. Upon receipt of the installation instruction, the firmware management programs 23E and 23F pass the firmware component and the update file to the corresponding firmware updating program (firmware updating unit) 33B via the remote management section 23B, and the firmware updating program 33B installs the piece of firmware concerned (step 507). Although finnware updating is also performed in this case, updating of the piece of firmware is not completed only by installing the firmware component. The updating is performed on the basis of the update file describing an update procedure. When the process in step 505 ends, the flow shifts to step 508.

If NO in step 506, after step 503, after step 505, or after step 507, the dependence relationship management program (dependence relationship management unit) 23I registers a piece of information of a dependence relationship table in the dependence relationship aggregation table 23J (step 508). The dependence relationship management program 231 updates dependence relationship information 603 in the dependence relationship aggregation table 23J and ends the process (step 509).

Note that if the installation target is an application on the remote management section, the gateway firmware management section may perform installation instead of the application management section.

### <Examples of Dependence Relationship Aggregation Table and Dependence Relationship Table>

Figure 6 is a chart showing an example of the dependence relationship aggregation table in which not all dependence relationships are settled. The dependence relationship aggregation table 23J contains a component name 601, a piece 602 of dependence destination information, and the piece 603 of dependence relationship information as pieces of information to be managed. Although each component name 601 is composed of a name and a version number connected with a hyphen, the name and the version number may be separately managed. Assume here a home network including controlled device A and controlled device B in addition to the gateway device 2. Reference characters serviceA and serviceB denote applications on the remote management section 23B which manage the functions of controlled device A and controlled device B, respectively. Reference characters firmwareA and firmwareB denote pieces of firmware of controlled device A and controlled device B, respectively. Reference characters firmwareG denote a piece of firmware of the gateway device. Reference characters serviceA-1.0 denote a service based on a component named firmwareA-1.0, and reference characters serviceB-1.0 denote a collaborative service based on a component named firmwareB-1.0 and a component named serviceA-2.0.

Referring to Figure 6, for example, the components named firmwareB-1.0 and serviceA-2.0 are required to implement the application named serviceB. Although the component named firmwareB-1.0 is already installed, the component named serviceA-2.0 is not installed yet. It can be seen that the component named serviceA-2.0 needs to be acquired from the center server 1.

Figure 7 shows an example of a dependence relationship table 700 which is distributed simultaneously with installation of service A of controlled device A in the gateway device 2. Figure 8 shows an example of the dependence relationship table 700 which is distributed simultaneously with installation of firmware A, on which service A of controlled device A depends, in controlled device A. The pieces of information of the tables are additionally registered in the dependence relationship aggregation table 23J, thereby settling the dependence relationships.

Figure 10 shows an example of the dependence relationship aggregation table 23J after dependence relationships are settled by installing the components named serviceA-2.0 and firmwareA-2.0.

### <Conclusion>

According to the present invention, when a piece of firmware is installed or updated, a gateway device acquires a firmware component of the gateway device and/or a controlled device and an update file describing the procedure for installing (performing updating with) the firmware component from a server placed outside a home network. A gateway firmware updating unit and/or a firmware updating unit installs the acquired firmware component in the gateway device and/or the controlled device according to the installation procedure described in the update file. This allows reliable installation or updating of a piece of firmware running outside an application execution environment (e.g., the OSGi framework) of the gateway device.

The gate device further includes a dependence relationship management table which manages information on a piece of firmware and/or an application required to implement a predetermined service and information on pieces of firmware and applications currently installed in the gateway device and the controlled device, a dependence relationship management unit which determines whether a piece of firmware and/or an application required to implement a predetermined service is present in the gateway device and/or the controlled device while referring to the dependence relationship management table, and an application updating unit which installs or updates an application. The gateway device acquires a firmware component and/or an application component for implementing a predetermined service and an update file describing the procedure for installing (performing updating with) the firmware component from the server on the basis of a result of determination by the dependence relationship management unit. After that, the gateway firmware updating unit and/or the firmware updating unit installs the acquired firmware component in the gateway device and/or the controlled device according to the installation procedure described in the update file. The application updating unit installs the acquired application component (an application which runs in the application execution environment) in the gateway device. As described above, a combination of (a dependence relationship between) an application and a piece of firmware required to implement a predetermined service is managed, and if an application or a piece of firmware necesssary for the gateway device and the controlled device is not installed, the piece of firmware or application is acquired from the center server and is installed. This makes it possible to implement a predetermined service, regardless of whether the service is in the application execution environment.

Note that the present invention can also be implemented by the program codes of software implementing the functions of the embodiment. In this case, a storage medium having the program codes recorded therein is provided in a system or an apparatus. A computer (or a CPU or an MPU) in the system or apparatus reads the program codes stored in the storage medium. In this case, the program codes themselves read from the storage medium implement the functions of the above-described embodiment. The program codes themselves and the storage medium storing the program codes constitute the present invention. For example, a flexible disk, a CD-ROM, a DVD-ROM, a hard disk, an optical disk, a magnetooptic disk, a CD-R, a magnetic tape, a nonvolatile memory card, or a ROM may be used as the storage medium for supplying the program codes.

Alternatively, an OS (Operating System) or the like running on the computer may perform a part or all of the actual processing in accordance with the instructions of the program codes, so as to implement the functions of the above-described embodiment. Moreover, after the program codes read from the storage medium are written to a memory on the computer, the CPU or the like in the computer may perform a part or all of the actual processing in accordance with the instructions of the program codes, so as to implement the functions of the above-described embodiment.

Alternatively, the program codes of the software implementing the functions of the embodiment may be distributed via a network and stored in storage means such as a hard disk or a memory of the system or apparatus, or a storage medium such as a CD-RW or a CD-R. Then, during use, the computer (or CPU or MPU) in the system or apparatus may read and execute the program codes stored in the storage means or the storage medium.

### Reference Signs List

1 ... center server
11A, 21A, 31A ... CPU
11B, 21B, 31B ... memory
13, 23, 33 ... external storage device
2 ... gateway device
3, 4 ... controlled device
5 ... router
6 ... home network
7 ... Internet
13A ... data transfer section
13B ... distribution data management section
23C, 23D ... service management program
23E, 23F ... firmware management program
23 G ... gateway firmware management program
23H ... gateway firmware updating program
23I ... dependence relationship management program
23J ... dependence relationship aggregation table
33A ... service processing program
33B ... firmware updating program
33C ... data transfer section
201 ... data transfer section
202 ... application management section
700 ... dependence relationship table
900 ... update procedure table

## Claims

1. A home network system comprising a gateway device and at least one controlled device connected to the gateway device over a home network,
wherein the gateway device includes a gateway firmware updating unit which installs or updates a piece of firmware of the gateway device,
each of the at least one controlled device includes a firmware updating unit which installs or updates a piece of firmware of the controlled device,
the gateway device acquires a firmware component of the gateway device and/or the controlled device and an update file describing a procedure for installing (performing updating with) the firmware component from a server placed outside the home network, and
the gateway firmware updating unit and/or the firmware updating unit installs the acquired firmware component in the gateway device and/or the controlled device according to the installation procedure described in the update file.

2. A home network system according to claim 1, wherein the pieces of firmware are each a piece of software which runs outside an application execution environment of the gateway device.

3. A home network system according to claim 1, wherein
the gateway device further includes a dependence relationship management table which manages information on a piece of firmware and/or an application required to implement a predetermined service and information on a piece of firmware and an application currently installed in the gateway device and the controlled device, a dependence relationship management unit which determines whether the piece of firmware and/or the application required to implement the predetermined service is present in the gateway device and/or the controlled device while referring to the dependence relationship management table, and an application updating unit which installs or updates the application,
the gateway device acquires a firmware component and/or an application component for implementing the predetermined service and an update file describing a procedure for installing (performing updating with) the firmware component from the server on the basis of a result of determination by the dependence relationship management unit, and
the gateway firmware updating unit and/or the firmware updating unit installs the acquired firmware component in the gateway device and/or the controlled device according to the installation procedure described in the update file, and the application updating unit installs the acquired application component in the gateway device.

4. A gateway device which is connected to at least one controlled device over a home network and manages each of the at least one controlled device, comprising:
a gateway firmware updating unit which installs or updates a piece of firmware of the gateway device; and
a communication unit which communicates with a server placed outside the home network and the controlled device,
wherein the communication unit acquires a firmware component of the gateway device and a gateway device update file describing a procedure for installing (performing updating with) the firmware component of the gateway device from the server, and
the gateway firmware updating unit installs the acquired firmware component in the gateway device according to the installation procedure described in the update file.

5. A gateway device according to claim 4, further comprising
a firmware management unit which instructs a firmware updating unit of the controlled device which installs or updates a piece of firmware of the controlled device to install or update a piece of firmware of the controlled device via the communication unit, wherein
the communication unit acquires a firmware component of the controlled device and a controlled device update file describing a procedure for installing (performing updating with) the firmware component of the controlled device from the server, and
the firmware management unit transfers the firmware component of the controlled device and the controlled device update file to the controlled device by using the communication unit and gives an instruction to install or update the piece of firmware of the controlled device.

6. A gateway device according to claim 5, wherein
the piece of firmware is a piece of software which runs outside an application execution environment of the gateway device.

7. A gateway device according to claim 5, further comprising:
a dependence relationship management table which manages information on a piece of firmware and/or an application required to implement a predetermined service and information on a piece of firmware and an application currently installed in the gateway device and the controlled device;
a dependence relationship management unit which determines whether the piece of firmware and/or the application required to implement the predetermined service is present in the gateway device and/or the controlled device while referring to the dependence relationship management table; and
an application updating unit which installs or updates the application, wherein
the communication unit acquires a firmware component and/or an application component for implementing the predetermined service and an update file describing a procedure for installing (performing updating with) the firmware component from the server on the basis of a result of determination by the dependence relationship management unit,
the gateway firmware updating unit installs the acquired firmware component in the gateway device according to the installation procedure described in the update file, and the application updating unit installs the acquired application component in the gateway device, and
if the firmware component and the update file for implementing the predetermined service are intended for the controlled device, the firmware management unit transfers the firmware component of the controlled device and the controlled device update file to the controlled device by using the communication unit and gives an instruction to install or update the piece of firmware of the controlled device.

8. A firmware update method for updating a piece of firmware of a gateway device within a home network and at least one controlled device connected to the gateway device,
wherein the gateway device includes a gateway firmware updating unit which installs or updates a piece of firmware of the gateway device,
each of the at least one controlled device includes a firmware updating unit which installs or updates a piece of firmware of the controlled device,
the gateway device acquires a firmware component of the gateway device and/or the controlled device and an update file describing a procedure for installing (performing updating with) the finnware component from a server placed outside the home network, and
the gateway firmware updating unit and/or the firmware updating unit installs the acquired firmware component in the gateway device and/or the controlled device according to the installation procedure described in the update file.
